# EUROPÄISCHE PATENTANMELDUNG

(11) **EP 0 948 113 A2**
(43) Veröffentlichungstag der Anmeldung: **06.10.1999**
(21) Anmeldenummer: 99104814.1
(22) Anmeldetag: 11.03.1999
(51) Int. Cl.: H02J 13/00

(54) **Verfahren und Vorrichtung zum Betrieb von Energieverbrauchseinheiten**

(30) Priorität: 04.04.1998 DE 19815169
(71) Anmelder: PreussenElektra Aktiengesellschaft, 30457 Hannover (DE)
(72) Erfinder: Mussenbrock, Konrad, Dr., 31832 Springe (DE)
(74) Vertreter: Stenger, Watzke & Ring Patentanwälte

(57) **Zusammenfassung**

Um ein Verfahren zur Unterstützung des Betriebs von Energieverbrauchseinheiten anzugeben, welches mit einfachen Mitteln sehr wirksam eine Verbesserung des Vorgangs der Energielieferung und eine Verbreiterung der Energienutzungsmöglichkeiten bietet, wird mit der Erfindung ein Verfahren zur Unterstützung des Betriebs von Energieverbrauchseinheiten mit mehreren Energieverbrauchsstellen vorgeschlagen, wobei eine einer Energieverbrauchseinheit zugeordnete Zentraleinheit (1) mit wenigstens einem Teil der Energieverbrauchsstellen (21,16) direkt oder indirekt verbunden ist und in der Zentraleinheit Betriebsdaten erfaßt, in einem vorgegebenen Protokoll konvertiert und zur Verarbeitung bereit gestellt werden.

## Beschreibung

Die vorliegende Erfindung betrifft ein Verfahren zur Unterstützung des Betriebs von Energieverbrauchseinheiten mit mehreren Energieverbrauchsstellen. Weiterhin betrifft die Erfindung eine Vorrichtung zur Durchführung des Verfahrens sowie eine Einheit zum Betrieb von Energieverbrauchsstellen.

Energieverbrauchseinheiten im Sinne der vorliegenden Erfindung sind beispielsweise Gebäude, Industriebauten, energieverbrauchende Anlagen und dergleichen, die unterschiedliche Energieverbrauchsstellen und unterschiedliche Anzahlen derselben aufweisen. Die verschiedenen Energien werden an eine Verbrauchseinheit herangeführt und von einer im wesentlichen zentralen Stelle an die Verbrauchsstellen verteilt. Sieht man beispielsweise eine Gebäudeeinheit, so kommt an einem zentralen Ort eine Stromversorgungsleitung an, an anderen Stellen können Gasleitungen, allgemein Brennstoffleitungen, Wärmeleitungen und dergleichen zugeführt werden.

Derzeit werden an zentralen Stellen die Verbrauchseinheiten erfaßt, durch die Energielieferanten abgelesen oder diesen mitgeteilt und der Energieverbrauch abgerechnet.

Da der Energiebereich für die Versorgungsunternehmen einen immer schwächer werdenden Wachstumsmarkt darstellt, und weil Energieverbrauch ein Vorgang ist, der in direktem Zusammenhang mit Umweltbelastung steht, wird die Forderung nach rationellerem Umgang mit Energie und damit der davon zu erwartenden Umweltentlastung verstärkt.

Die Energieverbraucher sind im Grunde auch nicht an Endenergie interessiert, also Strom, Erdgas und dergleichen, sondern lediglich an der Nutzung der daraus resultierenden Größen, beispielsweise Licht, Wärme, Kälte, Kraft und dergleichen. Darüber hinaus soll die Produktion und Auslieferung von Energie möglichst eng an den Bedarf angepaßt werden oder umgekehrt der Verbrauch an wirtschaftlich günstige oder sinnvolle Anbieterzeiten.

Alle genannten Vorhaben machen eine engere Kommunikation zwischen Verbraucher und Energielieferanten wünschenswert und erforderlich. Da die Verbesserung der Kommunikation zwischen Anbieter und Abnehmer nicht zu einer Personalintensivierung führen darf, werden neue Verfahren und Vorrichtungen benötigt, um den Betrieb von Energieverbrauchseinheiten zu verbessern bzw. zu unterstützten.

Es sind gegenwärtig durchaus Systeme bekannt, welche beispielsweise eine Fernabfrage eines Zählerstandes durchführbar machen. Dabei muß eine Kommunikationsleitung ausschließlich für diesen Zweck freigehalten werden. Auch sind Lösungen bekannt, die es ermöglichen, einzelne Ansteuerungsmaßnahmen über Kommunikationsleitungen durchzuführen, wobei ebenfalls jeweils eine Kommunikationsleitung erforderlich und dafür freigehalten werden muß. Sollen die einzelnen Dienstleistungsmaßnahmen bei Einheiten zusammengefaßt werden, würde dies entweder eine ungeheure Anzahl redundanter Kommunikationsmittel und -leitungen erforderlich machen, oder es besteht ein Bedarf an neuen Verfahren und Systemen.

Im Sinne der vorliegenden Erfindung umfaßt der Betrieb die Erfassung, Bewirtschaftung und gegebenenfalls Steuerung.

Neben der reinen Verbesserung des Betriebs von Energieverbrauchseinheiten steht auch die Möglichkeit der Erweiterungen der Angebote im Bereich von Energielieferungen. Beispielsweise kann es wünschenswert sein, ein sehr differenziertes Lastmanagement anzubieten, eine Anlagenüberwachung und dergleichen.

Ausgehend von dem beschriebenen Stand der Technik liegt der vorliegenden Erfindung die **Aufgabe** zugrunde, ein Verfahren zur Unterstützung des Betriebs von Energieverbrauchseinheiten anzugeben, welches mit einfachen Mitteln sehr wirksam eine Verbesserung des Vorgangs der Energielieferung und eine breite Verbreiterung der Energienutzungsmöglichkeiten hat.

Zur technischen **Lösung** dieser Aufgabe wird mit der Erfindung vorgeschlagen ein Verfahren zur Unterstützung des Betriebs von Energieverbrauchseinheiten mit mehreren Energieverbrauchsstellen, wobei gleichzeitig verschiedene Auswerte-, Ansteuerungs- und Abfrageverfahren eingesetzt werden, wobei eine einer Energieverbrauchseinheit zugeordnete Zentraleinheit nach Außerhalb über wenigstens eine Fern-Kommunikationseinheit zugänglich und nach Innen mit wenigstens einem Teil der Energieverbrauchsstellen direkt oder indirekt verbunden ist und von der Zentraleinheit selektiv ein Datentransfer durchgeführt und unter Berücksichtigung verschiedener Verfahren Betriebsdaten erfaßt, in ein vorgegebenen Protokoll konvertiert und zur Verarbeitung und/oder Übertragung bereit gestellt bzw. über die Fern-Kommunikationsanlage empfangene Steueranweisungen an die einzelnen Energieverbrauchsstellen geleitet werden.

Durch die Erfindung wird eine zentrale Betriebsdatenerfassung und Aufbereitung vorgeschlagen, welche unter Nutzung der heutigen elektronischen Möglichkeiten eine erhebliche Unterstützung bei der Lieferung und Versorgung mit Energie darstellt. In besonders vorteilhafter Weise werden die Betriebsdaten zur Fernübertragung bereitgestellt. Die auf ein vorgegebenes Protokoll, ein sogenanntes Kommunikationsprotokoll, konvertierten Daten werden gemäß einem Vorschlag der Erfindung für eine Fernabfrage gespeichert. Die erfindungsgemäße Zentraleinheit kann verfahrensgemäß eine Kommunikationsleitung, beispielsweise eine Telefonleitung, eine Funkleitung, eine für die Kommunikation ausgelegte Energieversorgungsleitung (Powerline) oder dergleichen auswerten und eingangsseitig erkennen, ob beispielsweise Zählerstandsabfragen durchgeführt werden oder Steuerbefehle eingehen. Die Zentraleinheit kann dann unter Verwendung des für die jeweilige Anwendung vorgesehenen Kanals und Steuersatzes den eingegangenen Befehl abarbeiten, also beispielsweise einen Zählerstand abfragen und das Ergebnis rückübertragen oder einen Steuerbefehl zur Ausübung bringen. Die Zentraleinheit ist dabei in der Lage, eine große Anzahl herkömmlicher und marktüblicher Verfahren und Systeme zu integrieren und über nur eine Kommunikationsleitung nutzbar zu machen.

Mit besonderem Vorteil wird vorgeschlagen, daß eine Verbindung der Zentraleinheit mit Verbrauchszählern zur Betriebsdatenerfassung hergestellt wird. Diese erfindungsgemäße Lösung ermöglicht ein zentralisiertes Fehlerauslesen, und zwar für alle Zählerarten, beispielsweise Elektrizität, Gas, Wasser, Wärme und dergleichen, wobei die Zählerdaten durch die Zentraleinheit über private und/oder öffentliche Kommunikationswege zur Verbrauchserfassung, Abrechnung, Analyse und Beratung an eine Leitstelle übertragen werden.

Vorteilhafterweise wird die Zentraleinheit mit auf Verbrauchseinheiten oder Verbrauchsstellen bezogenen Sensoren verbunden. In gleicher Weise kann gemäß einem besonders vorteilhaften Vorschlag der Erfindung die Zentraleinheit mit Verbrauchseinheiten oder Verbrauchsstellen bezogenen Aktoren verbunden werden. In allen Fällen können die erfaßten Betriebsdaten zu einer Statusabfrage zusammengestellt werden. Dadurch ist es möglich, von einer Leitstelle aus den Status unterschiedlicher Sonsoren oder Aktoren zu erfragen. Mit besonderem Vorteil wird vorgeschlagen, daß Sensoren und/oder Aktoren im Bereich von Energieentnahmestellen angeordnet sind. Hier können schaltbare Steckdosen, Leitungsventile und dergleichen verwendet werden. Alternativ oder ergänzend wird mit der Erfindung vorgeschlagen, daß Sensoren und/oder Aktoren an energieverbrauchenden Geräten angeordnet werden. Derartige fernkontrollierbare Sensoren oder Aktoren an Energieentnahmestellen und/oder energieverbrauchenden Geräten machen die Gehäusetechnik zu einer fernbewirtschaftbaren Angelegenheit, die im Hinblick auf Sicherheit, optimale Energienutzung, Wirtschaftlichkeit und dergleichen optimiert werden kann.

Gemäß einem besonders vorteilhaften Vorschlag der Erfindung können Zugangskontrolleinheiten mit der Zentraleinheit verbunden werden. Diese Lösung stellt eine Verbesserung bzw. Verbreiterung des Dienstleistungsangebotes dar, denn es können über Zugangskontrolleinheiten Bereiche gesichert werden, und zwar gegen unbefugten Zutritt, Einbruch und dergleichen.

In vorteilhafter Weise werden mehrere Zentraleinheiten mit einer Zwischenzentrale verbunden, wobei mehrere Zwischenzentralen gemäß einem weiteren vorteilhaften Vorschlag der Erfindung mit einer zentralen Leitstelle oder einer Zentralsteuerung verbunden werden können.

Als Verbindungen kommen alle technisch realisierbaren Verbindungen in Betracht, nämlich Telefonnetz, Powerline, Funk, Radiofrequenzen, Breitbandkabel, Lichtleiter und dergleichen. Auch Mobil-Telefonnetze und so weiter können verwendet werden. Mit dem erfindungsgemäßen Verfahren können Energieverbräuche automatisch abgelesen und zeitnah abgerechnet werden, Daten- und Marktanalysen durchgeführt werden, Bestellserviceleistungen abgewickelt werden, ein Lastmanagement installiert, ein Wartungsmanagement, ein Störungsmanagement bis hin zur externen Fehleranalyse und Arbeitssteuerung und dergleichen durchgeführt werden. Allgemein fallen Maßnahmen wie Signalisierung, Beobachtung bzw. Überprüfung, Ablesung, Messung, Schaltung, gegebenenfalls auch Programmierung und insbesondere Steuerung darunter.

Mit der Erfindung wird darüber hinaus ein System zur Durchführung eines Verfahrens zur Unterstützung des Betriebs von Energieverbrauchseinheiten der beschriebenen Art vorgeschlagen, welches wenigstens eine Zentraleinheit umfaßt, die ihrerseits wenigstens eine Prozessoreinheit, wenigstens eine Speichereinheit, wenigstens eine Kommunikationsschnittstelle und wenigstens eine Datenschnittstelle aufweist und direkt oder indirekt mit Energieverbrauchsstellen zur Datenerfassung und mit wenigstens einer Leitstelle zur Datenverarbeitung nach deren Konvertierung verbindbar ist.

Das erfindungsgemäße System basiert auf im Bereich von Energieverbrauchseinheiten angeordneten Zentraleinheiten als Kommunikationsschnittstelle, in welcher einerseits Eingangs- und/oder Ausgangsdaten mit oder ohne Verarbeitung durchgeleitet werden, andererseits Meldungen, Befehle und dergleichen im Rahmen einer datenbasierten Kommunikation.

In vorteilhafter Weise weist die Zentraleinheit eine Impulsschnittstelle auf, gemäß einem weiteren vorteilhaften Vorschlag der Erfindung auch eine Schnittstelle für Lichtwellenleiter. Die Zentraleinheit weist in vorteilhafter Weise eine Fernsprechkommunikationsschnittstelle auf. Weiterhin ist die Zentraleinheit mit Energieverbrauchszählern verbindbar. In vorteilhafter Weise kann die Zentraleinheit mit Sensoren und/oder Aktoren im Bereich von Energieentnahmestellen und/oder energieverbrauchenden Geräten verbindbar sein. Dadurch kann von einer zentralen Leitstelle, die über die Kommunikationsschnittstelle auf Daten zugreift oder Befehle übertragt, eine vollständige Bewirtschaftung einer Energieverbrauchseinheit, beispielsweise eines Gebäudes, durchgeführt werden. Die zentrale Leitstelle kann direkt mit Zentraleinheiten verbunden sein oder mit Zwischenzentralen, die ihrerseits wiederum eine Vielzahl von Zentraleinheiten zusammenfassen.

Mit besonderem Vorteil wird darüber hinaus vorgeschlagen, daß die Zentraleinheit mit wenigstens einer Schnittstelle für Kartenleseeinheiten verbunden ist, beispielsweise um Zugangskontrollen durchführen zu können. Darüber hinaus kann die Zentraleinheit mit Anzeigeeinheiten sowie mit Eingabe- und Ausgabegeräten verbunden sein, um eine Dateneingabe, Datenausgabe und Datendarstellung zu ermöglichen.

Schließlich kann die Zentraleinheit mit Schnittstellen versehen sein, um beispielsweise akustische Signale, Videosignale oder sonstige Signale von Aufnahme-, Sensoreinheiten und dergleichen zu erfassen, aufzubereiten und zur Verfügung zu stellen.

Mit besonderem Vorteil wird vorgeschlagen, daß die Zentraleinheit in einem normierten Gehäuse angeordnet ist, wodurch Aufstellung, Sicherung und modulartiger Aufbau sowie Austausch vereinfacht werden.

Das mit der Erfindung bereitgestellte System dient der Errichtung und Aufrechterhaltung des fernunterstützten Betriebs von Energieverbrauchseinheiten unter Verwendung einfacher und wirtschaftlich bereitstellbarer Mittel.

Schließlich schützt die Erfindung eine Zentraleinheit zum Einsatz in dem erfindungsgemäßen System nach dem erfindungsgemäßen Verfahren, umfassend wenigstens eine Prozessoreinheit, wenigstens einen Speicher sowie jeweils wenigstens eine Schnittstelle für Kommunikation und Daten.

Die vorliegende Erfindung basiert auf der Erkenntnis, daß Energieverbrauch einerseits ein Umweltbelastung darstellt, andererseits der Markt der Energieversorger kein nennenswertes Wachstum mehr bereitstellt. Daraus resultiert, daß der Energiemarkt nach wirtschaftlichen Gesichtspunkten optimiert werden muß. Dazu gehört einerseits die verbesserte Belieferung mit und Nutzung von Energie und andererseits die Verbesserung der Dienstleistungen rund um die Energielieferung.

Kern der Erfindung ist eine Zentraleinheit, die einer Energieverbrauchseinheit zugeordnet ist. Eine Energieverbrauchseinheit, beispielsweise ein Gebäude, weist eine Vielzahl von Energieverbrauchsstellen auf. Energieverbrauchsstellen sind Steckdosen, Leitungsenden, Transformatoren, Umwandlereinheiten oder abstrahlende Einheiten, beispielsweise bei der Lieferung von Fernwärme. Dazu gehören aber auch Anlagen im Industriebereich.

Die Zentraleinheit kann für eine Vielzahl von Maßnahmen eingesetzt werden, beispielsweise für die Zählerstandsfernübertragung, was bedeutet, daß Energieverbräuche automatisch abgelesen und zeitnah abgerechnet werden und darüber hinaus die Daten für eine Marktanalyse bereitstehen. Aber auch die Zulieferung von Brennstoff in preisoptimierten Zeitphasen, ein Lastmanagement, ein Wartungs- und ein Störungsmanagement sowie eine Fernmanagement für Kundenanlagen können bereitgestellt werden. Dazu bedarf es einer Kommunikationsschnittstelle, um von einer Leitstelle aus mit der Zentraleinheit kommunizieren zu können, und eine Datenschnittstelle, um in Abhängigkeit von den eingehenden Befehlen oder den eingehenden Abfragen Daten beschaffen oder ausgeben zu können. In Kombination mit Sensoren und Aktoren kann die Zentraleinheit für umfangreiche Maßnahmen verwendet werden, wobei nur beispielhaft genannt werden soll Verarbeitung von Störungsmeldungen, das heißt Veranlassung, Kontrolle, Abrechnung, Überwachung von Wartungs- und Inspektionsintervallen, Sicherstellung von Betriebsbereitschaff und Verfügbarkeit, Messen, Auswerten und Verbrauchsoptimierung, Berechnung von Gradtagen, Langzeit- und Mittelwerten, Wirkungsgrade, Energiemanagement, Zeitsteuerung, gleitender Schaltbetrieb, 24-Stunden-Service und Notdienst und so weiter. Kaufmännisch können Verbrauchsstatistiken, Energieberichte mit einheitlicher Verbraucherdarstellung (beispielsweise Verbrauch pro m²), Betriebskostenerfassungen und -abrechnungen, Kostenplanungen und - fortschreibungen und dergleichen. Infrastrukturell können darüber hinaus Alarmmeldungen bearbeitet werden, Zugangskontrollen durchgeführt werden und dergleichen.

Das Informationssystem wird in seiner Gesamtheit aus einer zentralen Leittechnik, einer Kommunikationseinheit im Bereich der Zentraleinheit und Verbindungen zu den unterschiedlichsten Verbrauchseinheiten umfassen. Dabei ist bevorzugt an eine Client-Server-Technologie zu denken, wobei dynamische Daten der betriebstechnischen Anlagen bedient, beobachtet und bewacht werden sollen. Ein weiterer Aspekt der Erfindung ist die sogenannte Konzentratortechnik, wobei eine Vielzahl von Zentraleinheiten lokal vernetzt werden und diesem Netz eine Zwischenzentrale, ein Konzentrator zugeordnet wird. Die Konzentratoren ihrerseits sind mit der Leitstelle verbunden.

Ein besonderer Aspekt der Erfindung liegt in der Bereitstellung von Sensoren und gegebenen falls auch Aktoren im Bereich von Verbrauchern. Dabei können Sensoren und Aktoren an Verbrauchsentnahmestellen, an Schaltern, an Geräten und dergleichen angeordnet werden. Die dialogfähigen Energieverbraucher sind somit über die entsprechende Zentraleinheit ebenfalls fernsteuerbar. Diese Fernsteuerung kann dazu verwendet werden, einen aus Verbrauchersicht wartungsfreien Betrieb und wartungsfreie Bereitstellung der gewünschten Verbrauchsergebnisse zu gewährleisten, also Licht, Wärme, Kälte und dergleichen, ohne daß sich der Verbraucher selbst um die jeweiligen Umsetzungen der zugeführten Energien kümmern muß. Innerhalb der Energieverbrauchseinheiten kann das vorhandene Stromnetz als Kommunikationsnetz verwendet werden. Im Kommunikationsbereich außerhalb der Energieverbrauchseinheiten bzw. der Kundenanlagen wird mit der Erfindung ebenfalls die Nutzung der Stromleitung vorgeschlagen. Hier sind sowohl Kommunikation auf Niederspannungsebene (400 Volt) als auch auf der Mittelsspannungsebene (20 kV) vorgesehen.

Die Zentraleinheit ist mit unterschiedlichsten Verbrauchszählem, also Elektrizitätszählern, Gaszählern, Warmwasserzählern und dergleichen zu verbinden. Dazu können an den Zählern entsprechende Datenerfassungsgeräte angeordnet werden, die digital mit der Zentraleinheit in Verbindung stehen. Auch analoge Erfassungen und anschließende Digitalisierungen sind denkbar. Zählerschnittstellen führen zu Dateneingängen in die Zentraleinheit, welche nach Transformation zur Übertragung an die Leitstelle zur Verfügung stehen, beispielsweise per Funk, per Mobiltelefonnetz, per Telefonnetz, per Stromleitung und dergleichen. In der Leitstelle können Abrechnungen erfolgen Dienstleistungen, Statistik, reine Visualisierungen und dergleichen Anwendungen.

Hauptvorgang in der Zentraleinheit ist die Konvertierung der Eingangsdaten in ein Übertragungsprotokoll, gegebenenfalls auch die Zwischenspeicherung.

Dabei ist vorzusehen, daß die Zentraleinheit einen Speicher sowohl für beglaubigte als auch unbeglaubigte Daten aufweist, eine synchronisierbare Zeitbasis und Uhr aufweist, eine Selbstwählfunktion, beispielsweise bei Alarmen oder Alarmzuständen, eine Zweiwegeschaltung für die Kommunikation, eine gegebenenfalls zusätzliche Spannungsversorgung für den Fall des Stromausfalls, eine Eigenüberwachung und Selbstdiagnose, eine Prioritätenerkennung sowie die Möglichkeit der Modemzulassung, Funkentstörung und Fernparametrierung. Besonders wünschenswert ist im Sinne der Erfindung die Verwendung eines normierten Gehäuses, beispielsweise um die Zentraleinheit einem Zählerfeld nach DIN 43870 anordnen zu können.

Weitere Vorteile und Merkmale der Erfindung ergeben sich aus der folgenden Beschreibung anhand der Figur. Dabei zeigt:

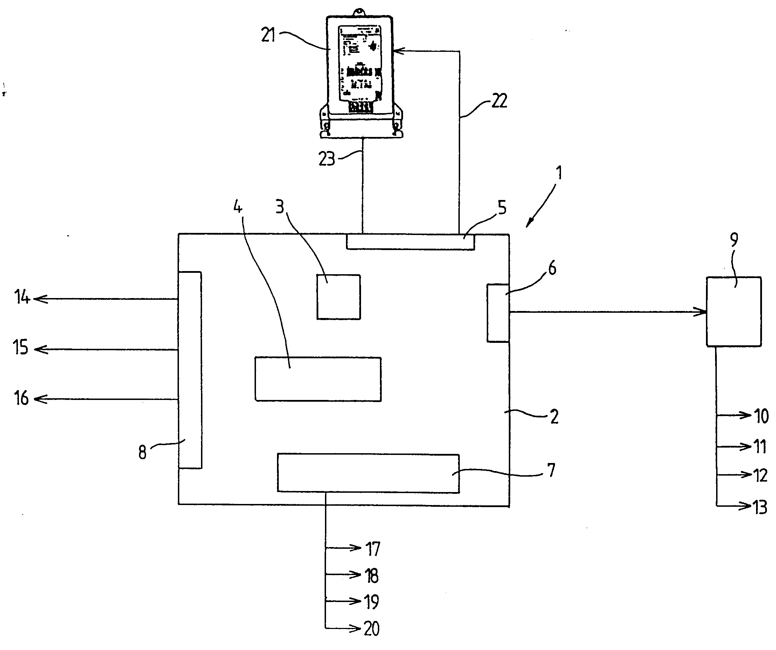

- Fig. 1: eine schematische Darstellung einer Zentraleinheit und ihrer Einbindung in das System

Die in der Figur 1 mit 1 bezeichnete Zentraleinheit, auch KomBox genannt, ist in einem vorzugsweise nach DIN normierten Gehäuse 2 angeordnet und weist einen Prozessoreinheit/Speichereinheit 3, eine Anzeigeeinheit 4 sowie Schnittstellenbereiche 5, 6, 7 und 8 auf. Die Darstellung in der Figur 1 ist nicht nach technisch exakten Gesichtspunkten gewählt, sondern nach Gesichtspunkten der formal vollständigen Erläuterbarkeit.

Beispielsweise ist die Zentraleinheit 1 über die Datenschnittstelle 5 mittels Leitung 23 mit einem Elektrizitätsverbrauchszähler verbunden. Von diesem Verbrauchszähler erhält die Zentraleinheit auf Anfrage Daten, die sie in eine entsprechendes Protokoll transformiert und speichert oder zur Kommunikation bereitstellt. Eine Zählersteuerung 22 kann von der Zentraleinheit ebenfalls zur Steuerung des Zählers 21 angesteuert werden.

Die Kommunikationsschnittstelle 6 dient beispielsweise der Zählerstandsfernübertragung, der Tarifsteuerung, der Lastprofilerkennung, der Fernparametrierung, der Durchführung bei Selbstfehlfunktion, der Zeitsynchronisation, der Prioritätenerkennung und dergleichen. Die Fernübertragung kann über ein beliebiges Medium erfolgen, beispielsweise über das Telefonnetz, durch Stromleitungen, Funk, Radiofrequenzen, Breitbandkabel, Lichtwellenleiter und dergleichen. Auch Mobiltelefonnetze gehören dazu.

In der Zentrale 9, auch Leitstelle genannt, werden verschiedene Anwendungen durchgeführt, wobei beispielhaft genannt sind die Visualisierung 10, die Abrechnung 11, die Dienstleistungen 12 oder die Statistik 13.

Eine weitere Schnittstelle 7 dient der Ein- und Ausgabe von Daten, beispielsweise Zählimpulsen, Tarifsteuerung, Synchronisation, Alarme und Meldungen und dergleichen. Die Schnittstelle 8 dient beispielsweise dem Anschluß an Sensoren 14, Aktoren 15, andere Zähler 16 und dergleichen mittels des Verfahrens LON (Local Operating Network) oder ähnlicher Verfahren. Darüber hinaus kann noch vorgesehen sein eine Serviceschnittstelle, eine Schnittstelle für Computer, eine Verbindungsstelle für eine unterbrechungsfreie Stromversorgung und dergleichen. Die Kommunikation zu Zählern kann erfolgen über CS-Schnittstellen, Impulsschnittstellen, Lichtwellenleiter usw. Darüber hinaus können herkömmliche Bussysteme, Lichtwellenleiter oder Impulsschnittstellen auch intern verwendet werden.

Die beschriebenen Ausführungsbeispiele dienen nur der Erläuterung und sind nicht beschränkt.

### Bezugszeichenliste

- 1: Zentraleinheit
- 2: Gehäuse
- 3: Prozessor/Speicher
- 4: Anzeigeeinheit
- 5: Datenschnittstelle
- 6: Kommunikationsschnittstelle
- 7: Schnittstelle
- 8: Schnittstelle
- 9: Leitstelle
- 10: Visualisierung
- 11: Abrechnung
- 12: Dienstleistung
- 13: Statistik
- 14: Sensoren
- 15: Aktoren
- 16: andere Zähler
- 17: Zählimpulse
- 18: Tarifsteuerung
- 19: Synchronisation
- 20: Alarm und Meldungen
- 21: Zähler
- 22: Steuerungsleitung
- 23: Kommunikationsleitung

## Patentansprüche

1. Verfahren zur Unterstützung des Betriebs von Energieverbrauchseinheiten mit mehreren Energieverbrauchsstellen, wobei gleichzeitig verschiedene Auswerte-, Ansteuerungs- und Abfrageverfahren eingesetzt werden, wobei eine einer Energieverbrauchseinheit zugeordnete Zentraleinheit nach Außerhalb über wenigstens eine Fern-Kommunikationseinheit zugänglich und nach Innen mit wenigstens einem Teil der Energieverbrauchsstellen direkt oder indirekt verbunden ist und von der Zentraleinheit selektiv ein Datentransfer durchgeführt und unter Berücksichtigung verschiedener Verfahren Betriebsdaten erfaßt, in ein vorgegebenen Protokoll konvertiert und zur Verarbeitung und/oder Übertragung bereit gestellt bzw. über die Fern-Kommunikationsanlage empfangene Steueranweisungen an die einzelnen Energieverbrauchsstellen geleitet werden.

2. Verfahren nach Anspruch 1, dadurch gekennzeichnet, daß die Zentraleinheit mit Energieverbrauchszählern verbunden wird.

3. Verfahren nach einem der vorhergehenden Ansprüche, dadurch gekennzeichnet, daß die Zentraleinheit mit verbrauchsbezogenen Sensoren zur Aufnahme von Sensordaten verbunden wird.

4. Verfahren nach einem der vorhergehenden Ansprüche, dadurch gekennzeichnet, daß die Zentraleinheit mit Aktoren zur Ansteuerung verbunden wird.

5. Verfahren nach einem der Ansprüche 3 oder 4, dadurch gekennzeichnet, daß über die Zentraleinheit Statusabfragen der Sensoren und/oder Aktoren durchgeführt werden.

6. Verfahren nach wenigstens einem der Ansprüche 3 bis 5, dadurch gekennzeichnet, daß die Sensoren und/oder Aktoren an Energieentnahmestellen angeordnet werden.

7. Verfahren nach wenigstens einem der Ansprüche 3 bis 5, dadurch gekennzeichnet, daß die Sensoren und/oder Aktoren an energieverbrauchenden Geräten angeordnet werden.

8. Verfahren nach wenigstens einem der vorhergehenden Ansprüche, dadurch gekennzeichnet, daß die Zentraleinheit zur Durchführung von Zugangskontrollen eingesetzt wird.

9. Verfahren nach einem der vorhergehenden Ansprüche, dadurch gekennzeichnet, daß mehrere Zentraleinheiten mit wenigstens einer Zwischenzentrale zu einem zentralen Netz verbunden werden.

10. Verfahren nach einem der vorhergehenden Ansprüche, dadurch gekennzeichnet, daß eine Vielzahl von Zentraleinheiten mit oder ohne Zwischenzentralen mit einem zentralen Leitstand verbunden werden.

11. System zur Durchführung eines Verfahrens zur Unterstützung des Betriebs von Energieverbrauchseinheiten mit mehreren Energieverbrauchsstellen, umfassend wenigstens eine Zentraleinheit mit wenigstens einer Prozessoreinheit, wenigstens einer Speichereinheit, wenigstens einer Kommunikationsschnittstelle und wenigstens einer Datenschnittstelle, über welche die Zentraleinheit mit Energieverbrauchsstellen direkt oder indirekt verbunden ist, wobei die Zentraleinheit über die wenigstens eine Kommunikationsschnittstelle mit einer Leitstelle verbindbar ist.

12. System nach Anspruch 11, dadurch gekennzeichnet, daß die Zentraleinheit eine Impulsschnittstelle aufweist.

13. System nach einem der Ansprüche 11 oder 12, dadurch gekennzeichnet, daß die Zentraleinheit wenigstens eine Lichtwellenleiter-Schnittstelle aufweist.

14. System nach einem der Ansprüche 11 bis 13, dadurch gekennzeichnet, daß die Kommunikationsschnittstelle zur Nutzung von Fernsprechkommunikationseinheiten ausgelegt ist.

15. System nach einem der Ansprüche 11 bis 14, dadurch gekennzeichnet, daß eine Zentraleinheit mit Energieverbrauchszählern verbindbar ist.

16. System nach einem der Ansprüche 11 bis 15, dadurch gekennzeichnet, daß eine Zentraleinheit mit verbrauchsbezogenen Sensoren verbindbar ist.

17. System nach einem der Ansprüche 11 bis 16, dadurch gekennzeichnet, daß eine Zentraleinheit mit Aktoren verbindbar ist.

18. System nach einem der Ansprüche 16 oder 17, dadurch gekennzeichnet, daß Sensoren und/oder Aktoren an Energieentnahmestellen angeordnet sind.

19. System nach einem der Ansprüche 16 oder 17, dadurch gekennzeichnet, daß Sensoren und/oder Aktoren an energieverbrauchenden Geräten angeordnet sind.

20. System nach einem der Ansprüche 11 bis 19, dadurch gekennzeichnet, daß mehrere Zentraleinheiten mit Zwischenzentraleinheiten verbunden sind.

21. System nach Anspruch 20, dadurch gekennzeichnet, daß eine Vielzahl von Zentraleinheiten und/oder Zwischenzentraleinheiten mit einer zentralen Leitstelle verbunden sind.

22. System nach einem der Ansprüche 11 bis 21, dadurch gekennzeichnet, daß die Zentraleinheit mit einer Kartenleseeinheit verbunden ist.

23. System nach einem der Ansprüche 11 bis 22, dadurch gekennzeichnet, daß die Zentraleinheit mit wenigstens einer Anzeigeeinheit verbunden ist.

24. System nach einem der Ansprüche 11 bis 23, dadurch gekennzeichnet, daß die Zentraleinheit ein normiertes Gehäuse aufweist.

25. Zentraleinheit zur Unterstützung des Betriebs von Energieverbrauchseinheiten mit mehreren Energieverbrauchsstellen, umfassend wenigstens eine Prozessoreinheit, wenigstens eine Speichereinheit, wenigstens eine Kommunikationsschnittstelle und wenigstens eine Datenschnittstelle, wobei die Zentraleinheit direkt oder indirekt über die Datenschnittstelle mit Energieverbrauchsstellen und über die Kommunikationsschnittstelle mit wenigstens einer Leitstelle verbindbar ist.
